Europäisches Patentamt

European Patent Office

Office européen des brevets

Veröffentlichungsnummer: **0 274 612**
A2

## EUROPÄISCHE PATENTANMELDUNG

Anmeldenummer: **87116944.7**

Int. Cl.4 **H01M 2/12 , H01M 2/04**

Anmeldetag: **17.11.87**

Priorität: **22.12.86 DE 3643920**

Veröffentlichungstag der Anmeldung:
**20.07.88 Patentblatt 88/29**

Benannte Vertragsstaaten:
**AT BE DE ES FR GB IT NL SE**

Anmelder: **ROBERT BOSCH GMBH**
**Postfach 50**
**D-7000 Stuttgart 1(DE)**

Erfinder: **Eisenacher, Werner, Dipl.-Ing.**
**Rapskamp 6**
**D-3204 Nordstemmen 4(DE)**

Bleiakkumulator in Blockausführung.

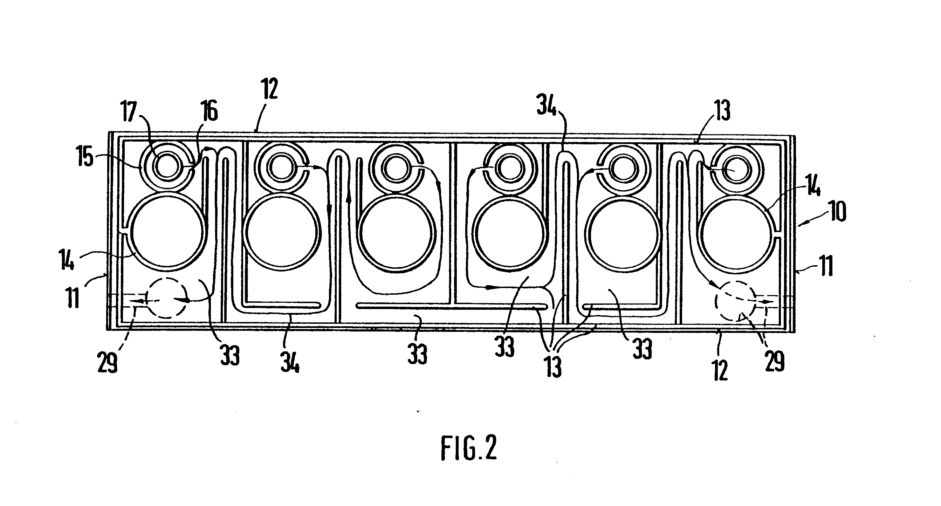

Von der Unterseite der Abdeckplatte (10) des Blockdeckels (18) stehen Stege (13-15) ab, die im wesentlichen zueinander rechtwinklig angeordnet sind und mit der Oberseite (20) des Blockdeckels (18) labyrinthartige Kanäle (33) bilden. In jeden Kanal (33) mündet eine der jeweiligen Zelle des Blockkastens (32) zugeordnete Entgasungsöffnung (21), und die Kanäle münden über einen Filter (30) in eine Gasauslaßöffnung (29) (Figur 2).

Durch das Entgasungslabyrinth erreicht man eine hohe Spritzsicherheit und Kippsicherheit ohne Flüssigkeitsauslauf (Säure) aus den Zellen. Der Filter (30) dient dabei als Sicherung gegen Entflammung der im Bleiakkumulator enthaltenen Knallgase infolge Funken u.ä.

EP 0 274 612 A2

FIG.2

## Bleiakkumulator in Blockausführung

Stand der Technik

Die Erfindung betrifft einen Bleiakkumulator in Blockausführung nach der Gattung des Anspruchs 1. Aus der DE-GM 80 03 869 ist ein derartiger Akkumulator bekannt, dessen Blockdeckel an der Oberseite Stege aufweist. Die Abdeckplatte hat eine ebene Unterseite, die mit den Stegen durch Schweißen unlösbar verbunden ist und hierdurch die geschlossenen Kanäle des Entgasungssystems bildet. Da die Oberseite des Blockdeckels durch die dreidimensionalen Öffnungen für Entlüftung und Gasauslaß bereits eine vielgestaltige Konfiguration aufweist, wird dies durch die Stege weiterhin kompliziert; hierdurch erschwert sich die Herstellung des Blockdeckels und dessen Spritzwerkzeug.

Vorteile der Erfindung

Mit dem Bleiakkumulator in Blockausführung nach der Erfindung wird das im vorerwähnten Stand der Technik dargelegte Problem mit technisch einfachen Mitteln im wesentlichen gelöst. Der Erfindung liegt der Gedanke zugrunde, die Stege an der bislnd ebenen Unterseite des Verschlußdeckels anzuordnen und hierdurch die Konfiguration der Oberseite des Blockdeckels zu vereinfachen.

Vorteilhafte Weiterbildungen der Erfindung sind in den Unteransprüchen beschrieben. Mit labyrinthförmigen Kanälen erreicht man eine Sicherheit gegen Spritzen und Kippen das Akkumulators; diese Sicherheit wird mit rechtwinklig zueinander angeordneten Stegen erhöht. Durch die Umlenkung des aus den Zellen aufsteigenden Gases erreicht man ein verstärktes Ausfallen der Aerosole und mithin eine geringere Belastung der Kanäle mit Flüssigkeit. Die abgeschrägte Stirnkante des Rohrstutzens der Entgasungsöffnung wirkt als Abtropfkante. Bei wartungsfreien Akkumultoren wird die Einfüllöffnung durch Anformen eines Rohrstutzens funktionsgerechter gestaltet. Die Trennung der Kanäle von der Einfüllöffnung erreicht man jeweils mit einem am Blockdeckel unlösbar verbundenen Steg.

Zeichnung

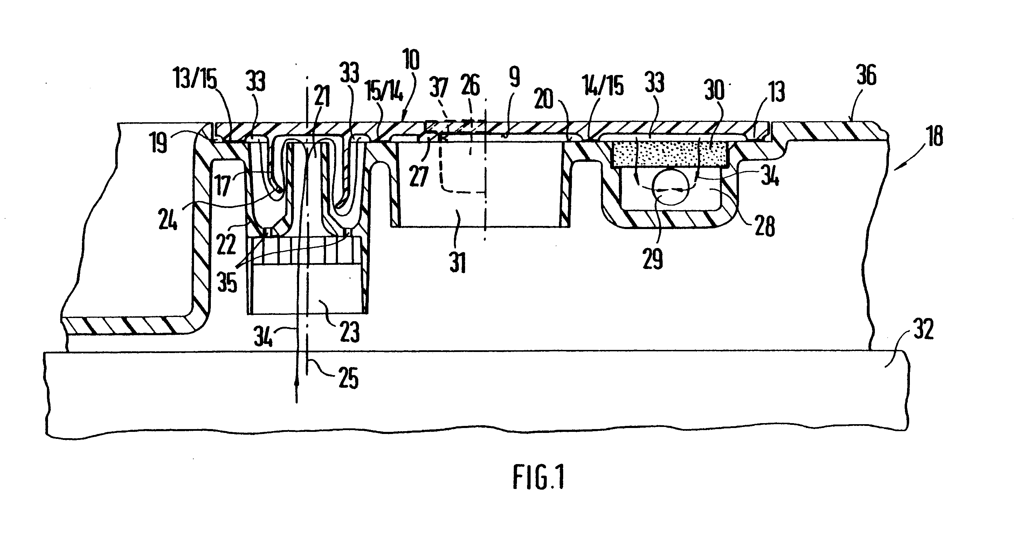

Ein Ausführungsbeispiel der Erfindung ist in der Zeichnung dargestellt und in der Figurenbeschreibung näher erläutert. Es zeigen: Figur 1 von einem Bleiakkumulator in Blockausführung einen Blockdeckel mit zugehöriger Abdeckplatte in abschnittsweiser, vergrößerter Darstellung; und Figur 2 die Unterseite der Abdeckplatte in verkleinerter Darstellung.

Beschreibung der Ausführung

Ein Blockdeckel 18 in Figur 1 ist aus Kunststoff gefertigt und hat eine Vertiefung 19, in der eine ebenfalls aus Kunststoff gefertigte Abdeckplatte 10 allseits bündig eingesetzt ist. In der Oberseite 20 des Blockdeckels 18 ist eine Entgasungsöffnung 21 mit einer Spritzschutz-Anordnung 22 angeformt, von der eine Hülse 23 in Richtung der zugeordneten Zelle (nicht dargestellt) eines Blockkastens 32 absteht.

In der Oberseite 20 des Blockdeckels 18 ist eine topfförmige Kammer 28 mit einer seitlichen Auslaßöffnung 29 angeordnet. Die Kammer 28 ist von einem plattenförmigen Filter 30 (Fritte) abgedeckt, der bündig in der Oberseite 20 befestigte ist; in dieser Oberseite 20 des Blockdeckels 18 ist für jede Zelle außerdem eine Einfüllöffnung 31 für Flüssigkeit angeordnet. Die Einfüllöffnung 31 ist als einstückiger Rohrstutzen an der Oberseite 20 angeformt und weist in Richtung der zugeordneten Zelle.

Die Abdeckplatte 10 in Figuren 1 und 2 hat zueinander rechtwinklige Begrenzungskanten 11 und 12, und von deren Unterseite stehen einstückig gerade Stege 13 ab, die zu einen zueinander rechtwinklig und zum andern parallel zu den Begrenzungskanten 11 und 12 angeordnet sind. Desgleichen stehen von der Unterseite der Abdeckplatte 10 ebenfalls einstückig ab sechs kreisrunde, in sich geschlossene Stege 14 und hierzu benachbart sechs kreisrunde Stege 15 mit jeweils einem seitlichen Druchbruch 16; hierbei ist jeweils ein Steg 14 und 15 einer Zelle (nicht dargestellt) zugeordnet. Die Stege 13 bis 15 sind derart angeordnet, daß hierdurch Kanäle in Form eines Labyrinths gebildet sind, welches ein Entgasungssystem bildet. Der Abstand der Oberseite 20 des Blockdeckels 18 zur Oberfläche 36 der Batterie beträgt weniger als 5 Millimeter, vorzugsweise 2,5 Millimeter. Weiterhin stehen von der Unterseite der Abdeckplatte 10 einstückig sechs Rohrstutzen 17 ab. Jeder Rohrstutzen 17 ist konzentrisch zur Achse 25, und die Stirnkante des Rohrstutzens 17 ist bezüglich der Achse 25 abgeschrägt angeordnet. Die Tiefe, d. h. die Ausdehnung in Richtung der Achse 25 der Entgasungsöffnung 21 ist derart bemessen, daß mit der Anordnung 22 ein vertikales Labyrinth gebildet wird.

In der Funktionslage des Bleiakkumulators in Blockausführung gemäß Figur 1 sind zum einen der Blockkasten 32 mit dem Blockdeckel 18 und zum andern die Stege 13 bis 15 der Abdeckplatte mit der Oberseite 20 des Blockdeckels durch Schweißen unlösbar befestigt: als Schweißverfahren kommen hierfür bevorzugt das bekannte Schmelzschweißen, aber auch das Ultraschall-bzw. Vibrationsschweißen in Frage. Hierdurch ist ein Entgasungssystem geschaffen, das im wesentlichen besteht aus den Entgasungsöffnungen 21, den durch das Labyrinth der Abdeckplatte 10 mit der Oberseite 20 des Blockdeckels 18 gebildeten Kanälen 33 und durch zwei Auslaßöffnungen 29 (in Figur 1 gestrichelt dargestellt). Jede Einfüllöffnung 31 ist zum Entgasungssystem und zur Außenatmosphäre durch die Stege 14 hermetisch abgeschlossen.

Der Weg des aus den Zellen austretenden Gases ist durch Pfeillinien 34 in beiden Figuren dargestellt. Der Weg führt anfänglich labyrinthartig durch die Entgasungsöffnung 21, danach ebenso labyrinthförmig durch die Kanäle 33 und schließlich über den Filter 30 in die Auslaßöffnung 29 und gelangt von dieser in die Außenatmosphäre. Mittels des Filters 30 werden aus dem Gas ausfallende Aerosole zurückgehalten und in die Kanäle 33 zurückgeleitet, wo sie als Flüssigkeit durch Löcher 35 in der Anordnung 22 über die Hülse 23 und in die Gefäße der Zellen zurückgeführt werden. Der Filter 30 dient außerden dazu, daß außerhalb des Bleiakkumulators befindliche heiße Quellen nicht die bevorzugt innerhalb des Bleiakkumulators befindlichen Knallgase zur Entzündung bringen.

Alternativ kann in der Abdeckplatte 10 und konzentrisch zu jeder Einfüllöffnung 31 ein Durchbruch 37 mit einem Auflagering 27 angeordnet sein, auf dem sich jeweils ein Verschlußstopfen 26 abstützt und mithin die Durchbrüche 37 hermetisch verschließt (halbseitig gestrichelt dargestellt). Der Verschlußstopfen 26 kann ein Druckstopfen (wie dargestellt) oder ein Schraubstopfen sein.

## Ansprüche

1. Bleiakkumulator in Blockausführung mit einem auf einem Blockkasten mit mehreren Zellen unlösbar befestigten Blockdeckel und mit einem Entgasungssystem, das für jede Zelle eine Entlüftungsöffnung aufweist, die in einen der Zelle zugeordneten geschlossenen Kanal mündet, der mit jedem Kanal der anderen Zellen in mindestens eine von einem Filter abgedeckten Gasauslaßöffnung mündet, und mit einer Abdeckplatte, die am Blockdeckel unlösbar verbunden ist und mit diesem die Kanäle bildet, gekennzeichnet dadurch, daß von der Unterseite der Abdeckplatte (10) mehrere Stege (13-15) abstehen, welche die seitliche Begrenzung der Kanäle (33) bilden und mit der Oberseite (20) des Blockdeckels (18) unlösbar verbunden sind.

2. Akkumulator nach Anspruch 1, dadurch gekennzeichnet, daß die Kanäle (33) als ein Labyrinth ausgebildet sind.

3. Akkumulator nach Anspruch 1 oder 2, bei dem die Entgasungsöffnung kreisförmig ist, dadurch gekennzeichnet, daß die Entgasungsöffnung (21) ein kreisförmiger Steg (15) mit einem seitlichen Durchbruch (16) umgibt, der in das Labyrinth mündet, und daß die Stege (13) zueinander rechtwinklig angeordnet sind, insbesondere parallel zu den Begrenzungskanten (11, 12) der rechteckförmigen Abdeckplatte (10).

4. Akkumlator nach Anspruch 3 mit einer Anordnung für Spritzschutz im Bereich der Entgasungöffnung, dadurch gekennzeichnet, daß von der Unterseite der Abdeckplatte (10) ein Rohrstutzen (17) absteht, der derart in die Anordnung (22) ragt, daß das aus der Zelle ausströmende Gas vertikal umgelenkt wird.

5. Akkumulator nach Anspruch 4, dadurch gekennzeichnet, daß von dem Abschnitt der Anordnung (22), der in Richtung der Zelle weist, eine vertikale Hülse (23) absteht.

6. Akkumulator nach Anspruch 5 oder 6, dadurch gekennzeichnet, daß die Stirnkante (24) des Rohrstutzens (17) bezüglich der Achse (25) der Entgasungsöffnung (21) in einem spitzen Winkl abgeschrägt ist.

7. Akkumulator nach einem der vorgenannten Ansprüche, dadurch gekennzeichnet, daß der Filter (30) plattenförmig geformt und in der Oberseite (20) des Blockdeckels (18) befestigt ist und daß unterhalb des Filters (30) eine Kammer (28) mit der Gasauslaßöffnung (29) angeordnet ist.

8. Akkumulator nach einem der vorgenannten Ansprüche mit einer jeder Zelle des Blockkastens zugeordneten Einfüllöffnung für Flüssigkeiten in dem von der Abdeckplatte verschlossenen Abschnitt der Oberseite des Blockdeckels, dadurch gekennzeichnet, daß die Einfüllöffnung (32) als Rohrstutzen am Blockdeckel (18) mit ausgeformt ist und in Richtung der zugeordneten Zelle weist.

9. Akkumulator nach Anspruch 8, dadurch gekennzeichnet, daß die Einfüllöffnung (31) ein kreisförmiger Steg (14) umgibt, der von der Unterseite (9) der Abdeckplatte (10) absteht und mit der Oberseite (20) des Blockdeckels (18) unlösbar verbunden ist.

10. Akkumulator nach Anspruch 8 oder 9, dadurch gekennzeichnet, daß in der Abdeckplatte 10 und konzentrisch zur Einfüllöffnung 31 ein Durchbruch 37 mit einem Auflagering 27 angeordnet ist und daß sich auf dem Auflagering 27 ein den Durchbruch 37 verschließender Steopfen (26) abstützt.

11. Akkumulator nach einem der vorgenannten Ansprüche, dadurch gekennzeichnet, daß der Abstand der Oberseite (20) des Blockdeckels (18) zur Oberfläche der Batterie (36) weniger als 5 Millimeter, insbesondere 2,5 Millimeter, beträgt.

FIG.1

0 274 612

FIG.2